# EUROPEAN PATENT APPLICATION

(11) **EP 3 065 259 A1**
(43) Date of publication of application: **07.09.2016**
(21) Application number: 14858263.8
(22) Date of filing: 31.10.2014
(51) Int. Cl.: H02J 7/10, H01M 10/44, H01M 10/48

(54) **CHARGING DEVICE, ELECTRICITY STORAGE SYSTEM, CHARGING METHOD, AND PROGRAM**

(30) Priority: 01.11.2013 JP 2013228668
(71) Applicant: NEC Corporation, Tokyo 108-8001 (JP)
(72) Inventor: UENO, Hiroaki, Tokyo 108-8001 (JP)
(74) Representative: Vossius & Partner Patentanwälte Rechtsanwälte mbB
(86) International application number: PCT/JP2014/079025
(87) International publication number: WO 2015/064734

(57) **Abstract**

There are provided a charging apparatus, electricity storage system, charging method, and program that charge a secondary battery in such a manner that the battery capacity increases according to a temperature change. The charging apparatus comprises: a temperature detection unit; and a charging control unit that changes an upper limit voltage value of a secondary battery to a first voltage value corresponding to a predetermined first temperature range in response to a detection result from the temperature detection unit indicating a first temperature within the first temperature range and that controls so that the secondary battery is charged until the upper limit value is reached.

## Description

### [TECHNICAL FIELD]

### (Reference to Related Application)

The present invention is based upon and claims the benefit of the priority of Japanese patent application No. 2013-228668, filed on November 1, 2013, the disclosures of which are incorporated herein in their entirety by reference thereto.

The present invention relates to a storage apparatus, a method, and a program.

The present invention relates to a charging apparatus for charging a secondary battery. The present invention relates to an electricity storage system that comprises the charging apparatus. The present invention relates to a charging method for charging a secondary battery. Further, the present invention relates to a program that operates the charging apparatus or a program that controls the charging method.

### [BACKGROUND]

In a mobile apparatus such as a smartphone or in an electric car, a secondary battery (rechargeable battery) is used as a power source. As one of such a secondary battery, a lithium-ion secondary battery is known.

When a secondary battery is charged, measures to prevent overcharging are normally taken in order to prevent accidents and reduction of the battery life (refer to Patent Literature 1).

Patent Literature 1 describes a method for charging a lithium-ion secondary battery in which a lithium-ion secondary battery is charged while being compared with a protective voltage (Vp) changing depending on the temperature, charging is stopped when the voltage of the battery exceeds the protective voltage (Vp), and the battery is charged while the charging voltage (Vc) is switched depending on the temperature zone. The method comprises: starting charging at the highest charging voltage (Vc) first and detecting the temperature and voltage of the battery; stopping the charging when the voltage of the battery exceeds the protective voltage (Vp) of the temperature zone detected from the temperature of the battery; and charging the battery at a constant voltage and a constant current using a charging voltage (Vc) corresponding to the temperature of the battery when the voltage decreases due to the stop of charging.

### [CITATION LIST]

### [PATENT LITERATURE]

[Patent Literature 1] Japanese Patent Kokai Publication No. JP2009-22079A

### [SUMMARY]

### [TECHNICAL PROBLEM]

The following analysis is given from a viewpoint of the present invention.

In a case where an upper limit of the battery voltage during charging is imposed in order to prevent overcharging, if the upper limit voltage is set too low, the capacity of the secondary battery at full charge will be insufficient. For instance, in a case where an upper limit of the battery voltage during charging depends on the temperature, the battery cannot be sufficiently charged in a case where the upper limit value is set on the basis of the temperature at the start of charging, but the upper limit voltage can be set higher than at the start of charging if it is set on the basis of the temperature after charging is completed.

In the charging method described in Patent Literature 1, after charging is stopped, the protective voltage is not switched unless charging is restarted due to a voltage drop. Therefore, in the charging method described in Patent Literature 1, when the temperature changes after charging is completed, sufficient charging corresponding thereto cannot be carried out.

### [SOLUTION TO PROBLEM]

According to a first aspect of the present invention, there is provided a charging apparatus comprising a temperature detection unit. The charging apparatus further comprises a charging control unit that changes an upper limit voltage value of a secondary battery to a first voltage value corresponding to a predetermined first temperature range in response to a detection result from the temperature detection unit indicating a first temperature within the first temperature range and that controls so that the secondary battery is charged until the upper limit value is reached.

According to a second aspect of the present invention, there is provided an electricity storage system comprising: the charging apparatus relating to the first aspect; the secondary battery connected to the charging apparatus; and a temperature sensor connected to the temperature detection unit.

According to a third aspect of the present invention, there is provided a program that operates the charging apparatus relating to the first aspect.

According to a fourth aspect of the present invention, there is a provided a method for charging a secondary battery. The method comprises setting an upper limit voltage value of the secondary battery to a first voltage value corresponding to a predetermined first temperature range. Further, the method comprises detecting a temperature related to the secondary battery. The method further comprises changing the upper limit value from the first voltage value to a second voltage value in response to detecting a temperature belonging to a predetermined second temperature range. Moreover, the method comprises charging the secondary battery to the second voltage value in response to detecting the temperature belonging to the second temperature range.

According to a fifth aspect of the present invention, there is provided a program for controlling the charging method relating to the fourth aspect.

### ADVANTAGEOUS EFFECTS OF INVENTION

The battery capacity can be increased more according to a temperature change in a case where the upper limit of the battery voltage during charging depends on the temperature.

### BRIEF DESCRIPTION OF THE DRAWINGS

Fig. 1 is a schematic block diagram showing an example of a charging apparatus relating to a first exemplary embodiment.
Fig. 2 is a schematic block diagram showing an example of a charging apparatus relating to a second exemplary embodiment.
Fig. 3 is a flowchart for explaining the operation of the charging apparatuses, the method for charging a secondary battery, and the program that operates the charging apparatuses or that controls the charging method relating to the first and the second exemplary embodiments.
Fig. 4 is a flowchart for explaining the operation of a charging apparatus, a method for charging a secondary battery, and a program that operates the charging apparatus or that controls the charging method relating to a third exemplary embodiment.
Fig. 5 is a flowchart for explaining the operation of a charging apparatus, a method for charging a secondary battery, and a program that operates the charging apparatus or that controls the charging method relating to a fourth exemplary embodiment.
Fig. 6 is a schematic block diagram showing an example of a charging apparatus relating to a fifth exemplary embodiment.
Fig. 7 is a flowchart for explaining the operation of a charging apparatus, a method for charging a secondary battery, and a program that operates the charging apparatus or that controls the charging method relating to a fifth exemplary embodiment.
Fig. 8 is a flowchart for explaining the operation of a charging apparatus, a method for charging a secondary battery, and a program that operates the charging apparatus or that controls the charging method relating to a sixth exemplary embodiment.
Fig. 9 is a diagram showing the transition of a charging voltage and a charging current in the sixth exemplary embodiment.
Fig. 10 is a diagram showing the transition of the charging voltage and the charging current in the sixth exemplary embodiment.
Fig. 11 is a diagram showing the transition of the charging voltage and the charging current in the sixth exemplary embodiment.
Fig. 12 is a diagram showing the transition of the charging voltage and the charging current in the sixth exemplary embodiment.
Fig. 13 is a diagram showing the transition of a charging voltage and a charging current in a seventh exemplary embodiment.
Fig. 14 is a diagram showing the transition of the charging voltage and the charging current in the seventh exemplary embodiment.
Fig. 15 is a diagram showing the transition of a charging voltage and a charging current in an eighth exemplary embodiment.
Fig. 16 is a flowchart for explaining the operation of a charging apparatus, a method for charging a secondary battery, and a program that operates the charging apparatus or that controls the charging method relating to a ninth exemplary embodiment.
Fig. 17 is a schematic diagram showing an example of an electricity storage system relating to a tenth exemplary embodiment.
Fig. 18 is a schematic diagram showing an example of an electricity storage system relating to an eleventh exemplary embodiment.

### [DESCRIPTION OF EMBODIMENTS]

In the description below, drawing reference signs are given solely to facilitate understanding of the present invention and are not intended to limit the present invention to the modes shown in the drawings. In each exemplary embodiment, the same signs are given to the same elements.

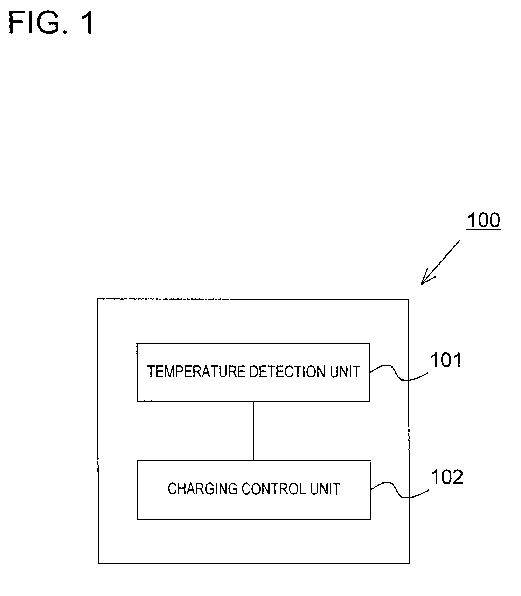

A charging apparatus relating to a first exemplary embodiment will be described. Fig. 1 shows a schematic block diagram showing an example of the charging apparatus relating to the first exemplary embodiment. The charging apparatus 100 includes a circuit for charging a secondary battery. For instance, a lithium-ion battery may be used as the secondary battery. Various forms of batteries can be applied as the lithium-ion battery. As positive electrode materials, for instance, cobalt-based positive electrode using lithium cobalt oxide (LiCoO₂), manganese-based positive electrode using lithium manganese oxide (LiMn₂O₄), and nickel-based positive electrode using lithium nickel oxide (LiNiO₂) may be used. There is no restriction on negative electrode materials, electrolyte materials, and separator materials. As negative electrode materials, for instance, graphite may be used. The secondary battery may be a single cell battery or at least a single battery pack in which a plurality of cells are connected in series so as to obtain a predetermined voltage. When the secondary battery has a plurality of battery packs, the plurality of battery packs may be connected in parallel or in series. The secondary batteries to which the charging apparatus 100 is applied are not limited to lithium-ion batteries. For instance, the charging apparatus 100 may be applied to nickel-metal hydride battery using hydrogen storing alloy. In each exemplary embodiment below, a lithium-ion battery is charged as an example.

The charging apparatus 100 comprises a temperature detection unit 101 that detects a battery-related temperature described later, and a charging control unit 102 that controls the charging of the secondary battery so that the voltage of the secondary battery reaches a predetermined upper limit value. The temperature detection unit 101 outputs the information of a detected temperature to the charging control unit 102. The charging control unit 102 sets an upper limit for the secondary battery voltage and controls the charging of the secondary battery on the basis of the temperature information from the temperature detection unit 101.

It is preferred that the temperature detected by the temperature detection unit 101 be the temperature of a part of the secondary battery. This is because, during charging of a lithium-ion battery, the temperature of the secondary battery influences the deposition of hazardous substances such as lithium. When the temperature of the secondary battery is detected, for instance, the temperature of a cell, the temperature between cells, and the temperature of a conductor connecting cells may be detected. Further, the temperature detected by the temperature detection unit 101 is not limited to the temperature of the secondary battery, and the temperature detection unit 101 may detect the temperature of an environment in which the secondary battery, the charging apparatus 100, or an electricity storage system described later is provided since the temperature of such an environment greatly influences the temperature of the secondary battery. For instance, when a secondary battery is used in an automobile, the temperature of an outdoor place or garage where the automobile is parked is an example of the temperature of an environment in which the secondary battery, the charging apparatus 100 or the electricity storage system is provided. Further, when a secondary battery is used in a mobile apparatus, the temperature to which the secondary battery or the mobile apparatus is exposed may be used. Hereinafter, the temperature detected by the temperature detection unit 101 will be referred to as "battery-related temperature."

In each exemplary embodiment below, in order to ensure safety, a temperature range, to which the battery-related temperature belongs, is divided into at least two regions according to the risk of deposition of hazardous substances such as lithium. In first to seventh exemplary embodiments, the temperature range is divided into two: a first temperature range and a second temperature range. It is preferred that the first and the second temperature ranges be adjacent to each other. The boundaries of the temperature ranges may be set to any desired values. For instance, the boundary between the first and the second temperature ranges may be set so as to avoid an increase in the risk of deposition of hazardous substances such as lithium when charging is carried out in the first temperature range in the same conditions as in the second temperature range. Further, it is preferred that an upper limit of the voltage of the secondary battery during charging be set to different voltage values for the first and the second temperature ranges. Here, the upper limit value of the voltage of the secondary battery during charging in the first temperature range is referred to as the first voltage value, and the upper limit value of the voltage of the secondary battery during charging in the second temperature range is referred to as the second voltage value. For instance, the first temperature range may be set to include a region of a battery-related temperature of minus ten degrees Celsius or less, or preferably a region of zero degrees Celsius or less. Further, the second temperature range may be set to include a region of ten degrees Celsius or more, or preferably a region of zero degrees Celsius or more. In this case, for instance, the first voltage value may be set to 4.1 V or higher, but less than 4.15 V. Further, the second voltage value may be set to 4.15 V or higher, but less than 4.2 V.

The operation of the charging apparatus, a method for charging the secondary battery, and a program that operates the charging apparatus or that controls the charging method relating to the first exemplary embodiment will be described later.

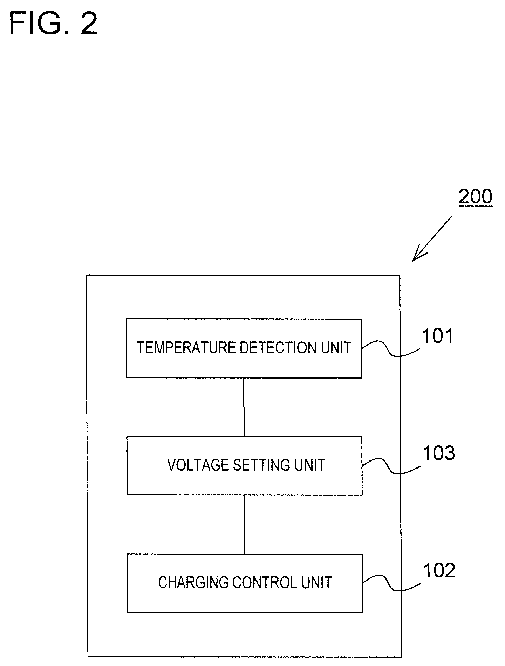

Next, a charging apparatus relating to a second exemplary embodiment will be described. Fig. 2 shows a schematic block diagram illustrating an example of the charging apparatus relating to the second exemplary embodiment.

In addition to the configuration of the charging apparatus relating to the first exemplary embodiment, the charging apparatus 200 comprises a voltage setting unit 103 that sets a voltage (for instance the upper limit value) associated with the control of charging the secondary battery during charging. The temperature detection unit 101 outputs detected temperature information to at least the voltage setting unit 103. The voltage setting unit 103 sets an upper limit voltage value of the secondary battery on the basis of the temperature information from the temperature detection unit 101. The voltage setting unit 103 outputs the upper limit value information set thereby to at least the charging control unit 102. The charging control unit 102 controls the charging of the secondary battery on the basis of the upper limit value information from the voltage setting unit 103.

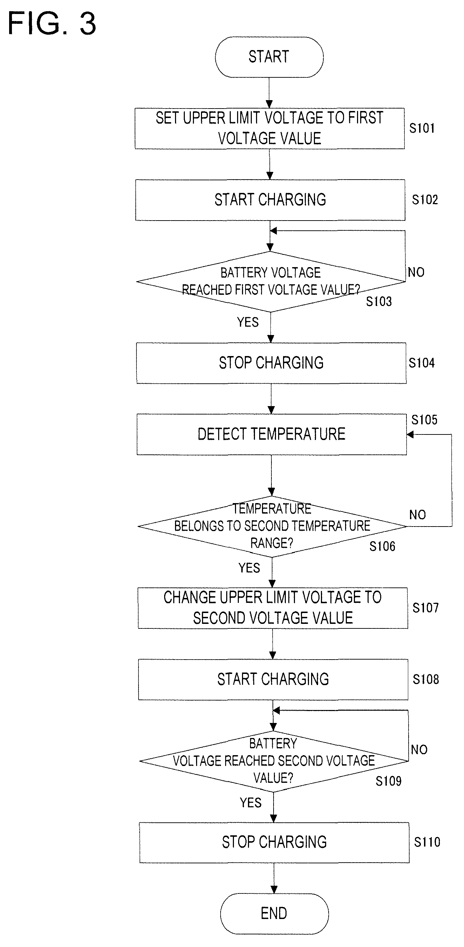

The operation of the charging apparatuses, the method for charging the secondary battery, and the program that operates the charging apparatuses or that controls the charging method relating to the first and the second exemplary embodiments will be described. Fig. 3 shows a flowchart for explaining the operation of the charging apparatuses, the method for charging the secondary battery, and the program that operates the charging apparatuses or that controls the charging method relating to the first and the second exemplary embodiments.

First, before the charging of the secondary battery is started, the charging control unit 102 sets the upper limit value of the voltage of the secondary battery during charging to a predetermined first voltage value in order to prevent overcharging. Or the voltage setting unit 103 sets the upper limit voltage value of the secondary battery during charging to the first voltage value (step S101). The voltage setting unit 103 outputs upper limit value information to the charging control unit 102, indicating that the first voltage value has been set. Next, the charging control unit 102 starts charging the secondary battery in response to information detecting connection between the secondary battery and a charging power supply or the upper limit value information from the voltage setting unit 103 (step S102). Further, when the voltage of the secondary battery does not reach the first voltage value, the upper limit voltage value of the secondary battery may be set after charging has started. The charging control unit 102 charges the secondary battery until the voltage of the secondary battery reaches the first voltage value (steps S103, S104). In step S102, if the voltage of the secondary battery is not less than the first voltage value before the start of charging, the charging control unit 102 does not start charging.

Next, the temperature detection unit 101 detects the battery-related temperature at least after the charging has stopped (step S105). It is preferred that the temperature detection unit 101 detect the temperature at a time interval. This interval may be appropriately set at a period of less than one second, several seconds, or several minutes, etc. The temperature detection unit 101 may continue to detect the temperature before charging has started. It is preferred that the temperature detection unit 101 continue to detect the temperature at least until the battery voltage reaches the second voltage value. The temperature detection unit 101 outputs the information of the detected temperature to at least one of the charging control unit 102 and the voltage setting unit 103.

Next, when the battery-related temperature detected by the temperature detection unit 101 belongs to the second temperature range, the charging control unit 102 or the voltage setting unit 103 changes the upper limit voltage value of the secondary battery during charging to the second voltage value, which is higher than the first voltage value, in response to the temperature information from the temperature detection unit 101 (steps S106, S107). In a case where the voltage setting unit 103 sets the upper limit value, the voltage setting unit 103 outputs upper limit value information to the charging control unit 102, indicating that the second voltage value has been set. Next, the charging control unit 102 starts charging the secondary battery in response to at least one of the temperature information from the temperature detection unit 101 and the upper limit value information from the voltage setting unit 103, and continues to charge the secondary battery until the voltage of the secondary battery reaches the second voltage value (steps S108, S109). The charging control unit 102 stops charging the secondary battery (step S110) when the voltage of the secondary battery reaches the second voltage value.

An appropriate secondary battery charging method may be suitably selected. For instance, the so-called constant current (CC) charging, described later, may be selected. Or the constant current charging may be combined with the so-called constant voltage (CV) charging. Or a table associating battery voltage with charging current may be set up in advance and charging may be controlled on the basis of this table.

A program can be realized by turning all the steps in the method described above into processes of the program. This will be the case with the exemplary embodiments below.

According to the first and second exemplary embodiments, even in a case where an upper limit voltage value must be set low at the start of charging, the battery capacity can be automatically increased when a temperature change create conditions in which the upper limit voltage value can be set high.

Advantageous effects of the first and the second exemplary embodiments will be described using a lithium-ion secondary battery used in an automobile as an example. Electric car usually requires high capacity. As a result, charging time tends to be long. Therefore, it is desirable that a secondary battery in an electric car be charged at night when the user does not use the car. Especially, since the electric power rate at night is usually set lower than during the day for the purpose of load leveling, charging at night is preferable for the sake of reducing power costs. Meanwhile, when a lithium-ion battery is charged, it is necessary to have a battery voltage that avoids the deposition of the lithium. As described above, one of the factors that influence the deposition of lithium is the temperature of the secondary battery. Therefore, in a low temperature condition, the battery voltage must be set low. For instance, when charging is carried out at night in winter, especially in a cold region, the battery voltage must be set lower than an upper limit voltage used for charging during the day. For instance, when the first temperature range in the second exemplary embodiment is defined as temperatures less than zero degrees Celsius and the second temperature range as zero degrees Celsius or more, it is necessary to set the first voltage value to 4.0 V and the second voltage value to 4.2 V. In this case, if the temperature at the start of charging is less than zero degrees Celsius, the capacity of the secondary battery will be insufficient since the charging will stop at the first voltage value 4.0 V. However, even if the battery-related temperature is less than zero degrees Celsius at the start of charging, the battery-related temperature may rise to zero degrees Celsius or more during the charging or when the user starts to use the car. In this case, it is desirable that the secondary battery be charged to the second voltage value 4.2 V at night before the user starts to use the car, with the convenience of the user and power costs taken into account. According to the first and the second exemplary embodiments, in a case where the temperature reaches the point, due to factors such as an increase in the outside air temperature, the utilization of heating means, and the operation of heating appliances, where the upper limit voltage can be increased, the secondary battery can be charged to the second voltage value while the user is not using the car, especially a time period when the electric power rate is low. As a result, the secondary battery can be charged to the maximum during downtime while power costs are reduced. Further, safety can be ensured since the upper limit voltage can be changed according to the degree of the risk of lithium deposition during charging.

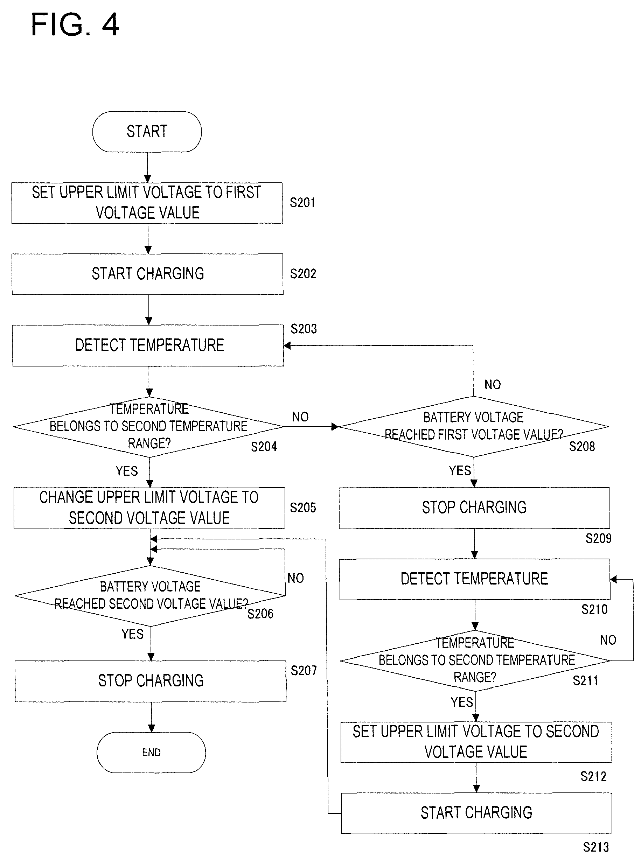

Next, the operation of a charging apparatus, a method for charging a secondary battery, and a program that operates the charging apparatus or that controls the charging method relating to a third exemplary embodiment will be described. Fig. 4 shows a flowchart for explaining the operation of the charging apparatus, the method for charging a secondary battery, and the program that operates the charging apparatus or that controls the charging method relating to the third exemplary embodiment. The configuration of the charging apparatus and how the temperature ranges are set in the third exemplary embodiment are the same as in the first and the second exemplary embodiments. The upper limit voltage value of the secondary battery is changed after the battery has been charged to the first voltage value in the first and the second exemplary embodiments. In the third exemplary embodiment, the upper limit voltage is changed when there is a temperature change even if the battery has not been charged to the first voltage value.

Steps S201 and S202 are the same as steps S101 and S102 shown in Fig. 3.

Next, the temperature detection unit 101 detects the battery-related temperature after the start of charging as in the first and the second exemplary embodiments (step S203). The temperature detection unit 101 outputs the detected temperature information to at least one of the charging control unit 102 and the voltage setting unit 103.

Next, when the battery-related temperature detected by the temperature detection unit 101 belongs to the second temperature range, the charging control unit 102 or the voltage setting unit 103 changes the upper limit voltage during charging to the second voltage value, which is higher than the first voltage value, in response to the temperature information from the temperature detection unit 101 while the charging control unit 102 continues to charge the battery (steps S204, S205). Steps thereafter are identical to steps S109 and S110 shown in Fig. 3 (steps S206, S207).

In a case where the battery-related temperature detected by the temperature detection unit 101 does not belong to the second temperature range in step S204, the temperature detection unit 101 detects the battery-related temperature again when the battery voltage has not reached the first voltage value (steps S208, S203).

In the case where the battery-related temperature detected by the temperature detection unit 101 does not belong to the second temperature range in step S204, when the battery voltage is detected to have reached the first voltage value, the charging control unit 102 stops charging in response thereto (steps S208, S209). Steps thereafter are identical to the steps from steps S105 to S110 shown in Fig. 3 (steps S210 to S213, S206, S207).

According to the third exemplary embodiment, the same advantageous effects as those of the first and the second exemplary embodiments can be obtained. Further, charging can be completed in a shorter period of time since charging does not stop in transition to the second temperature range while the battery is still charged to the first voltage value.

The third exemplary embodiment is otherwise identical to the first and the second exemplary embodiments.

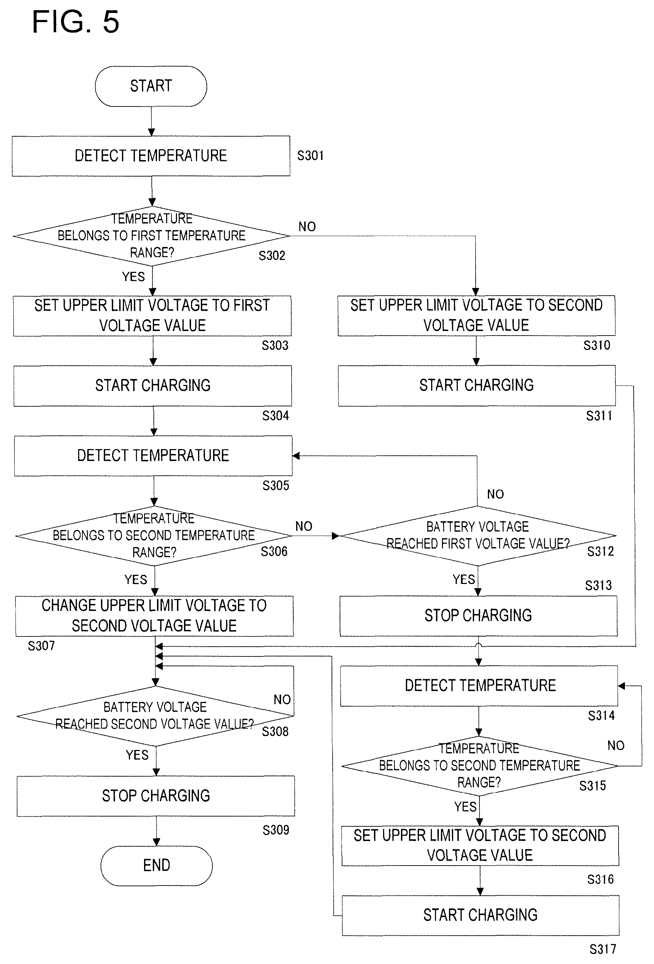

Next, the operation of a charging apparatus, a method for charging a secondary battery, and a program that operates the charging apparatus or that controls the charging method relating to a fourth exemplary embodiment will be described. Fig. 5 shows a flowchart for explaining the operation of the charging apparatus, the method for charging a secondary battery, and the program that operates the charging apparatus or that controls the charging method relating to the fourth exemplary embodiment. The configuration of the charging apparatus and how the temperature ranges are set in the fourth exemplary embodiment are the same as in the first and the second exemplary embodiments. The temperature is detected after charging has been started in the first to the third exemplary embodiments, but in the fourth exemplary embodiment, the temperature is detected before the start of charging.

First, the temperature detection unit 101 detect the battery-related temperature after the start of charging as in the second exemplary embodiment (step S301). The temperature detection unit 101 outputs the detected temperature information to at least one of the charging control unit 102 and the voltage setting unit 103.

When the battery-related temperature detected by the temperature detection unit 101 belongs to the first temperature range, the charging control unit 102 or the voltage setting unit 103 sets the upper limit voltage value of the secondary battery during charging to the first voltage value in response to the temperature information from the temperature detection unit 101 (step S303). When the battery-related temperature belongs to the second temperature range, the charging control unit 102 or the voltage setting unit 103 sets the upper limit voltage value of the secondary battery during charging to the second voltage value, which is higher than the first voltage value (step S310). In a case where the voltage setting unit 103 sets the upper limit value, the voltage setting unit 103 outputs information indicating the set upper limit value to the charging control unit 102. Next, the charging control unit 102 starts charging the secondary battery in response to the temperature information from the temperature detection unit 101 and the upper limit value information from the voltage setting unit 103 (steps S304, S311).

In a case where charging has started with the second voltage value set as the upper limit voltage, steps thereafter are the same as S109 and S110 shown in Fig. 3 (steps S308, S309).

In a case where charging has started with the first voltage value set as the upper limit voltage, steps thereafter are the same as the steps from steps S203 to S213 shown in Fig. 4 (steps S305 to S309, S312 to S317).

According to the fourth exemplary embodiment, the same advantageous effects as those of the first and the second exemplary embodiments can be obtained. Further, a more appropriate upper limit voltage value can be set according to the temperature at the start of charging. As a result, charging can be completed in a shorter period of time when the temperature at the start of charging belongs to the second temperature range.

The fourth exemplary embodiment was described using the third exemplary embodiment as the basis, however, the fourth exemplary embodiment can be applied to the first and the second exemplary embodiments as well. The fourth exemplary embodiment is otherwise identical to the first and the second exemplary embodiments.

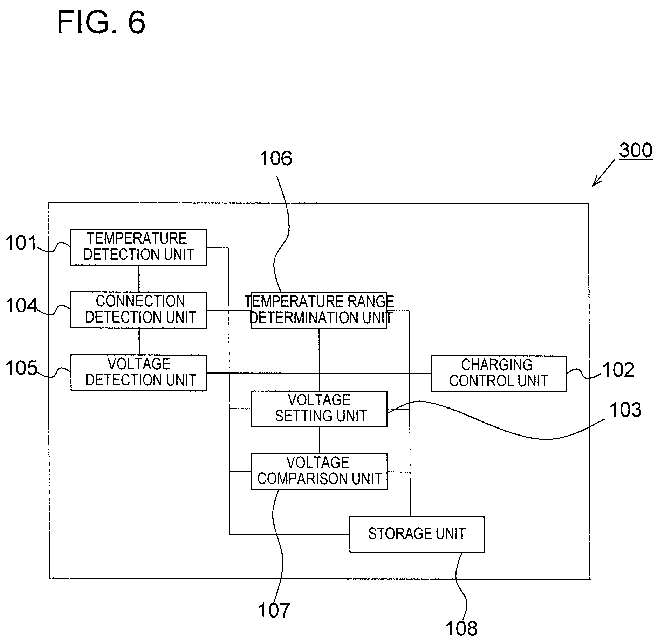

Next, a charging apparatus relating to a fifth exemplary embodiment will be described. Fig. 6 shows a schematic block diagram illustrating an example of the charging apparatus relating to the fifth exemplary embodiment. The charging apparatus 300 relating to the fifth exemplary embodiment is a more preferred mode of the charging apparatuses relating to the first and the second exemplary embodiments.

In addition to the temperature detection unit 101, the voltage setting unit 103, and the charging control unit 102 in the first and the second exemplary embodiments, the charging apparatus 300 comprises a connection detection unit 104 that detects the presence of connection between a charging power supply and a secondary battery, and a voltage detection unit 105 that detects the voltage of the secondary battery. The charging apparatus 300 further comprises a storage unit 108 that stores various data, a temperature range determination unit 106 that determines to which temperature range a temperature detected by the temperature detection unit 101 belongs, and a voltage comparison unit 107 that compares an set upper limit value with the voltage of the secondary battery. The storage unit 108 suitably stores necessary information such as, for instance, upper limit voltage values corresponding to temperature ranges, temperature ranges during charging, a current value during constant current charging, a charging voltage value during constant voltage charging, a charge termination current value during constant voltage charging, and a charging start voltage value. Note that the charging apparatus 300 does not have to comprise all the units described above.

The connection detection unit 104 can be configured so as to output detected connection information to at least the temperature detection unit 101 and the voltage detection unit 105. The temperature detection unit 101 can be configured so as to detect the battery-related temperature on the basis of the connection information from the connection detection unit 104. The temperature detection unit 101 can be configured so as to output detected temperature information to at least one of the temperature range determination unit 106, the voltage setting unit 103, and the charging control unit 102. The voltage detection unit 105 can be configured so as to detect the voltage of the secondary battery on the basis of the connection information from the connection detection unit 104. The voltage detection unit 105 can be configured so as to output detected voltage information to at least the voltage comparison unit 107 and the charging control unit 102. The temperature range determination unit 106 can be configured so as to determine to which temperature range the battery-related temperature belongs on the basis of the temperature information from the temperature detection unit 101. The temperature range determination unit 106 can be configured so as to output determined temperature range information to at least one of the voltage setting unit 103 and the charging control unit 102. The charging control unit 102 and the voltage setting unit 103 can be configured so as to set an upper limit value on the basis of the temperature range information from the temperature range determination unit 106. When the voltage setting unit 103 sets the upper limit value, the voltage setting unit 103 can be configured so as to output the upper limit value information set thereby to at least one of the charging control unit 102 and the voltage comparison unit 107. The voltage comparison unit 107 can be configured so as to compare the set upper limit value with the voltage value of the secondary battery on the basis of the voltage information from the voltage detection unit 105. The voltage comparison unit 107 can be configured so as to output comparison result information to at least the charging control unit 102. The charging control unit 102 can be configured so as to control the charging of the secondary battery on the basis of at least one piece of the information from each unit.

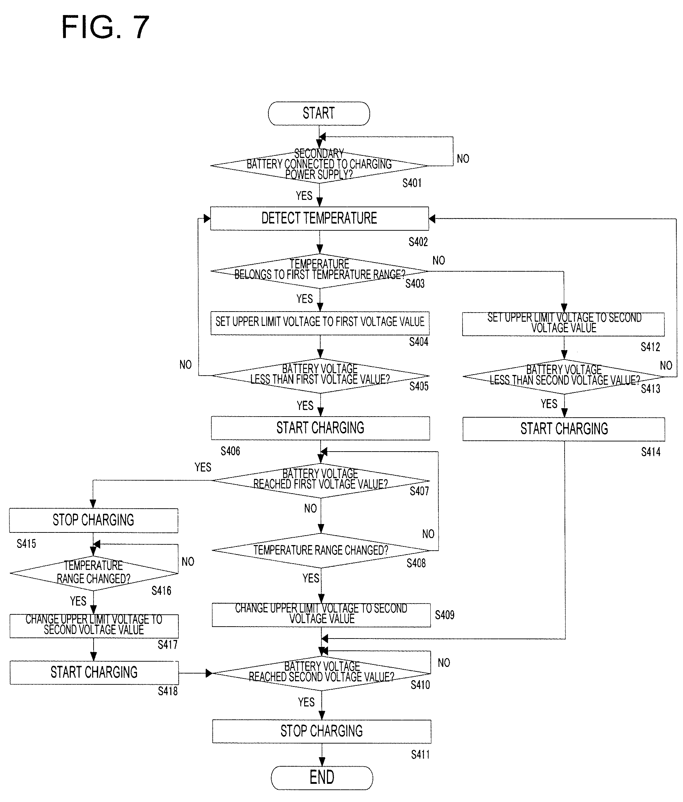

Next, the operation of the charging apparatus, a method for charging a secondary battery, and a program that operates the charging apparatus or that controls the charging method relating to the fifth exemplary embodiment will be described. Fig. 7 shows a flowchart for explaining the operation of the charging apparatus, the method for charging a secondary battery, and the program that operates the charging apparatus or that controls the charging method relating to the fifth exemplary embodiment. The operation of the charging apparatus and the charging method relating to the fifth exemplary embodiment will be described using the fourth exemplary embodiment as the basis, however, the fifth exemplary embodiment can be applied to the first to the third exemplary embodiments as well.

First, the connection detection unit 104 detects whether or not the secondary battery is electrically connected to a charging power supply (step S401). For instance, in a case of a secondary battery used in an electric car, the connection detection unit 104 detects whether or not the car charger is connected to the charging power supply. In a case of a secondary battery used in a mobile apparatus, the connection detection unit 104 detects whether or not the mobile apparatus is connected to a charger connected to a power supply. The connection detection unit 104 outputs connection information of the charging power supply to at least the temperature detection unit 101 and the voltage detection unit 105. The connection detection unit 104 may output the connection information to the other units.

Next, in response to the connection information from the connection detection unit 104, the temperature detection unit 101 detects at least the battery-related temperature after the connection has been confirmed (step S402). Note that the temperature detection unit 101 may detect the temperature before the secondary battery is connected to the charging power supply. Thereafter, regardless of whether or not charging is being carried out, the temperature detection unit 101 continues to detect the battery-related temperature at a time interval at least until the secondary battery reaches the second voltage value. The temperature detection after step S402 is not shown in Fig. 7.

Next, in response to the temperature information detected by the temperature detection unit 101, the temperature range determination unit 106 refers to the storage unit 108 and determines to which temperature range the temperature detected by the temperature detection unit 101 belongs (step S403). The temperature range determination unit 106 may determine the temperature range using an instantaneous temperature or on the basis of a temperature for a predetermined period of time or a mean temperature. For instance, the temperature range determination unit 106 may determine the temperature range on the basis of one piece of temperature information or a plurality of pieces of temperature information for a predetermined period of time. It is preferred that the storage unit 108 store associations between temperatures and temperature ranges in advance. The temperature range determination unit 106 outputs the determined temperature range information to at least one of the voltage setting unit 103 and the charging control unit 102.

Next, in response to the temperature range information from the temperature range determination unit 106, the charging control unit 102 or the voltage setting unit 103 refers to the storage unit 108 and sets the upper limit voltage value of the secondary battery to a voltage value corresponding to the temperature range. It is preferred that the storage unit 108 store associations between temperature ranges and upper limit voltages in advance. The charging control unit 102 or the voltage setting unit 103 sets the upper limit voltage to the first voltage value when the detected temperature belongs to the first temperature range (step S404). The charging control unit 102 or the voltage setting unit 103 sets the upper limit voltage to the second voltage value when the detected temperature belongs to the second temperature range (step S412). The storage unit 108 stores the upper limit voltage value set thereby. When the voltage setting unit 103 sets the upper limit value, the voltage setting unit 103 outputs the upper limit value information set thereby to the voltage comparison unit 107 and the charging control unit 102.

The voltage detection unit 105 detects the voltage of the secondary battery in response to the connection information from the connection detection unit 104. It is preferred that the voltage detection unit 105 continuously detect the battery voltage at a time interval after the battery has been connected to the charging power supply. The voltage detection unit 105 outputs the information of the secondary battery voltage detected to the voltage comparison unit 107.

Next, the voltage comparison unit 107 compares the voltage value of the secondary battery with the set upper limit value on the basis of the voltage information from the voltage detection unit 105 (steps S405, S413). The voltage comparison unit 107 outputs the comparison result information to the charging control unit 102. When the battery voltage value is less than the upper limit value, the charging control unit 102 starts charging the secondary battery in response to the comparison result information from the voltage comparison unit 107 (steps S406, S414). When the battery voltage is equal to or more than the upper limit voltage value, the steps after the temperature detection step (step S402) will be repeated.

In response to the comparison result information from the voltage comparison unit 107, the temperature information from the temperature detection unit 101, or the temperature range information from the temperature range determination unit 106, the charging control unit 102 may set the upper limit value of the battery voltage to a predetermined first voltage value or second voltage value and charge the secondary battery.

In this example, the voltage value at the start of charging and the upper limit value during charging are the same. The voltage value at the start of charging, however, may be set to a different voltage value than the upper limit value. For instance, the voltage value at the start of charging is set to a voltage value less than the first voltage value, and the storage unit 108 stores this voltage value at the start of charging. In this case, the voltage comparison unit 107 compares the battery voltage value with the voltage value at the start of charging. Then the charging control unit 102 starts charging when the battery voltage is less than the voltage at the start of charging. Even if the battery voltage value is less than the first voltage value, the charging control unit 102 will not start charging when the battery voltage is not less than the voltage value at the start of charging.

Further, the voltage detection step and the voltage comparison step may be performed before the temperature detection step.

The voltage comparison unit 107 determines whether or not the battery voltage has reached the second voltage value on the basis of the voltage information from the voltage detection unit 105. When the battery voltage has reached the second voltage value, the charging control unit 102 stops charging in response to the comparison result information from the voltage comparison unit 107 (steps S410, S411). In this case, the secondary battery can be charged to its maximum capacity since the upper limit voltage value during charging is set to the maximum value in an allowable range.

In a case where the upper limit voltage value during charging is set to the first voltage value and the detected voltage has reached the first voltage value before the detected temperature has reached the second temperature range, the charging control unit 102 stops charging in response to the comparison result information from the voltage comparison unit 107 (steps S407, S415). In this case, the temperature detection unit 101 continues to detect the battery-related temperature even after the charging has stopped. When the detected temperature belongs to the second temperature range after the charging has stopped, the voltage setting unit 103 changes the upper limit voltage value of the secondary battery to the second voltage value in response to the temperature range information from the temperature range determination unit 106 (steps S416, S417). Next, in response to the temperature range information from the temperature range determination unit 106 or the upper limit value information from the voltage setting unit 103, the charging control unit 102 starts charging and charges the secondary battery until the voltage of the secondary battery reaches the second voltage value as above (steps S418, S410, S411).

In a case where the upper limit voltage value during charging is set to the first voltage value and the detected temperature has reached the second temperature range before the detected voltage has reached the first voltage value, the charging control unit 102 or the voltage setting unit 103 changes the upper limit voltage value of the secondary battery to the second voltage value while charging in response to the temperature range information from the temperature range determination unit 106 (steps S407 to S409). Then the charging control unit 102 continues the charging and charges the secondary battery until the voltage of the secondary battery reaches the second voltage value as above (steps S410, S411).

According to the fifth exemplary embodiment, the same advantageous effects as those of the first and the second exemplary embodiments can be obtained. Further, a more appropriate upper limit voltage value can be set according to the temperature situation regardless of whether or not charging is being carried out. Further, the charging stop time can be reduced. As a result, charging can be completed safely in a short period of time.

The charging apparatus 300 relating to the fifth exemplary embodiment can be applied to the first to the fourth exemplary embodiments as well. The fifth exemplary embodiment is otherwise identical to the first to the fourth exemplary embodiments.

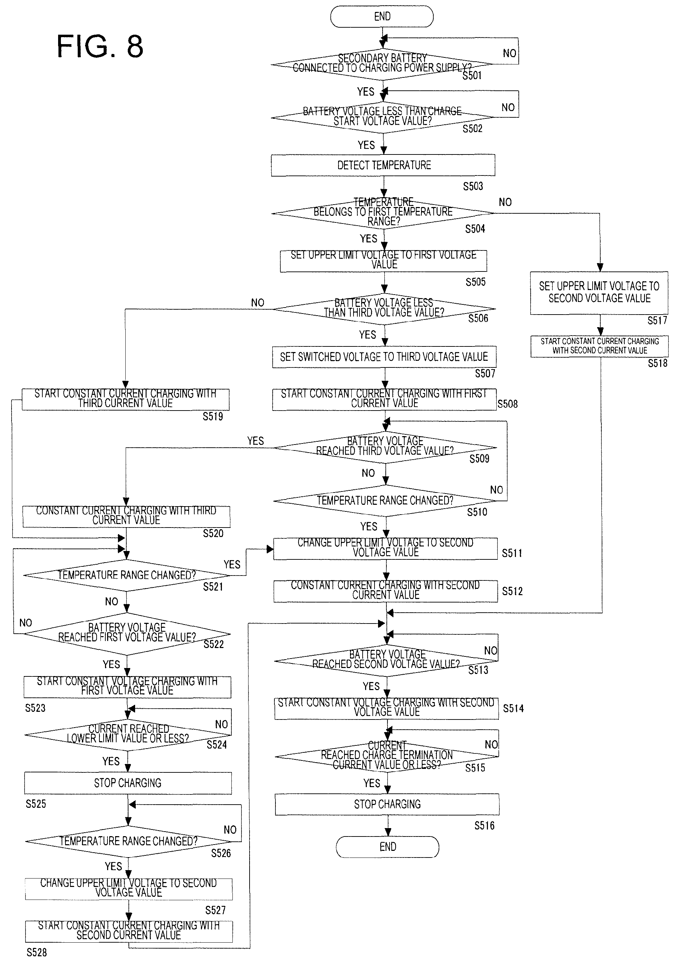

Next, the operation of a charging apparatus, a method for charging a secondary battery, and a program that operates the charging apparatus or that controls the charging method relating to a sixth exemplary embodiment will be described. Fig. 8 shows a flowchart for explaining the operation of the charging apparatus, the method for charging a secondary battery, and the program that operates the charging apparatus or that controls the charging method relating to the sixth exemplary embodiment. The configuration of the charging apparatus and how the temperature ranges are set in the sixth exemplary embodiment are the same as in the fifth exemplary embodiment. The sixth exemplary embodiment is a preferred mode of the fifth exemplary embodiment. The operation of the charging apparatus and the charging method relating to the sixth exemplary embodiment will be described using the fifth exemplary embodiment as the basis, however, the sixth exemplary embodiment can be applied to the first to the fourth exemplary embodiments as well.

First, as in the fifth exemplary embodiment, the connection detection unit 104 detects whether or not the secondary battery is electrically connected to a charging power supply (step S501). The connection detection unit 104 outputs connection information of the charging power supply to the temperature detection unit 101 and the voltage detection unit 105. The connection detection unit 104 may output the connection information to the other units.

Next, in response to the connection information from the connection detection unit 104, the voltage detection unit 105 detects the voltage of the secondary battery. It is preferred that the voltage detection unit 105 continuously detect the battery voltage at a time interval thereafter. The voltage detection unit 105 outputs the detected information to the voltage comparison unit 107. Next, the voltage comparison unit 107 compares the detected voltage value with a predetermined charge start voltage value in response to the voltage information from the voltage detection unit 105. As described above, the charge start voltage value may or may not be the same as the upper limit value during charging. In response to the connection information from the connection detection unit 104, the temperature detection unit 101 detects the battery-related temperature after the connection detection unit 104 has detected the connection (steps S502, S503). In the flow shown in Fig. 8, the temperature detection is performed after the voltage comparison, however, the order of the voltage comparison and the temperature detection is not limited. Further, the temperature detection unit 101 may detect the temperature before the secondary battery is connected to the charging power supply. The temperature detection unit 101 outputs the detected temperature information to the temperature range determination unit 106.

Next, as in the fifth exemplary embodiment, on the basis of the temperature information from the temperature detection unit 101, the temperature range determination unit 106 refers to the storage unit 108 and determines to which temperature range the temperature detected by the temperature detection unit 101 belongs (step S504). The temperature range determination unit 106 outputs the temperature range information to at least one of the voltage setting unit 103 and the charging control unit 102.

Next, when the battery-related temperature belongs to the first temperature range, in response to the temperature range information from the temperature range determination unit 106, the charging control unit 102 or the voltage setting unit 103 refers to the storage unit 108 and sets the upper limit voltage value of the secondary battery to the first voltage value (step S505). When the voltage setting unit 103 sets the upper limit value, the voltage setting unit 103 outputs the upper limit value information to the charging control unit 102.

Next, the voltage comparison unit 107 compares the battery voltage with a predetermined third voltage value on the basis of the voltage information from the voltage detection unit 105 (step S506). The voltage comparison unit 107 outputs the comparison result information to the charging control unit 102.

The third voltage value is a voltage value for completing charging in a shorter period of time without causing deposition of hazardous substances such as lithium during charging in the first temperature range. In other words, when the battery voltage reaches the third voltage value, the charging control unit 102 switches the charging format. It is preferred to charge with a higher current in order to reduce the charging time. If, however, the battery having a low battery-related temperature and a high battery voltage is charged with a high current, highly hazardous substances such as lithium or lithium compound may be generated. For instance, if the battery is charged with a high current to the first voltage value (for instance 4.1 V or more) in the first temperature range (for instance less than zero degrees Celsius), the risk of causing deposition of hazardous substances will be high around the first voltage value. Therefore, it is preferred to charge the battery with a low current around the first voltage value in order to ensure safety. Charging can be completed safely and quickly with a high current in the case of a low battery voltage and with a low current in the case of a high battery voltage. The third voltage value is set so as to avoid the generation of lithium even when the battery is charged with a high current (the first current value in the exemplary embodiments below). Therefore, the third voltage value is set lower than the first voltage value.

When the battery voltage detected by the voltage detection unit 101 is less than the third voltage value, the voltage setting unit 103 may refer to the storage unit 108 and set the switched voltage value of the charging format to the third voltage value in response to the comparison result information from the voltage comparison unit 107 (step S507). In this case, the voltage setting unit 103 outputs the set switched voltage value to the charging control unit. The charging control unit 102 starts charging with a first current value until the battery reaches the third voltage value in response to the comparison result information from the voltage comparison unit 107 or the information from the voltage setting unit 103 (step S508; a first constant current charging step). The first current value can be changed according to the temperature. It is preferred that the first current value be predetermined.

When the temperature range to which the temperature belongs changes before the battery voltage reaches the third voltage value, the voltage setting unit 103 changes the upper limit value of the battery voltage during charging to the second voltage value as in the previous exemplary embodiments above (steps S509 to S511). The charging control unit 102 continues the constant current charging until the battery reaches the second voltage value. At this time, the charging control unit 102 may change the charging current value. For instance, the charging control unit 102 may charge the battery with a second current value higher than the first current value if the risk of deposition of hazardous substances decreases due to a temperature increase (step S512). As a result, charging can be completed in a shorter period of time. It is preferred that the second current value be predetermined.

Next, when the battery voltage has reached the second voltage value, the charging control unit 102 switches to charging the battery with the second voltage value in response to the comparison result from the voltage comparison unit 107 (steps S513, S514; constant voltage charging step). As a result, the battery capacity can be increased. Then, when the charging current reaches a predetermined current value (charge termination current value) or less, the charging control unit 102 stops charging (steps S515, S516).

When the temperature at the start of charging belongs to the second temperature range, the charging control unit 102 or the voltage setting unit 103 sets the upper limit voltage value of the secondary battery to the second voltage value in response to the temperature range information from the temperature range determination unit 106 (steps S504, S517). Then the charging control unit 102 starts charging the battery with the second current value until the battery voltage reaches the second voltage value (step S518). Steps thereafter are the same as the steps from steps S513 to S516.

Even when the temperature at the start of charging belongs to the first temperature range, the charging control unit 102 starts charging with a third current value until the battery voltage reaches the first set value on the basis of the results from the voltage comparison unit 107 in a case where the battery voltage before the start of charging detected by the voltage detection unit 105 is equal to the third voltage value or more (step S519). The third current value should be a current value with which hazardous substances such as lithium will not be generated when the battery having a high voltage is charged in a low temperature. It is preferred that the third current value be less than the first current value. It is preferred that the third current value be predetermined.

Further, in a state in which the charging control unit 102 starts charging with the first current value, when the battery voltage detected by the voltage detection unit 105 reaches the third voltage value, the charging control unit 102 continues to charge the battery while switching the charging current from the first current value to the third current value in response to the comparison result information from the voltage comparison unit 107 (step S520; second constant current charging step). The charging control unit 102 may switch the charging format in response to information from the voltage setting unit 103.

When the battery-related temperature reaches the second temperature range before the battery voltage reaches the first voltage value while the battery is charged with the third current value, the charging control unit 102 or the voltage setting unit 103 changes the upper limit voltage value of the secondary battery to the second voltage value in response to the temperature range information from the temperature range determination unit 106 (steps S521, S511). Steps thereafter are the same as the steps from steps S512 to S516.

When the battery voltage reaches the first voltage value while the battery is charged with the third current value and the battery-related temperature remains within the first temperature range, the charging control unit 102 switches to charging with the first voltage value in response to the comparison result information from the voltage comparison unit 107 (steps S522, S523; constant voltage charging step). Then, when the charging current reaches a predetermined current value (charge termination current value) or less, the charging control unit 102 stops charging (steps S524, S525).

After the charging has been stopped, when the temperature range to which the battery-related temperature belongs changes from the first temperature range to the second temperature range, the charging control unit 102 or the voltage setting unit 103 changes the upper limit voltage value of the secondary battery from the first voltage value to the second voltage value in response to the temperature range information from the temperature range determination unit 106 (steps S526, S527). Then the charging control unit 102 starts charging the battery with the second current value until the battery voltage reaches the second voltage value in response to the temperature range information from the temperature range determination unit 106 or the upper limit value information from the voltage setting unit 103 (step S528). Steps thereafter are the same as the steps from steps S513 to S516.

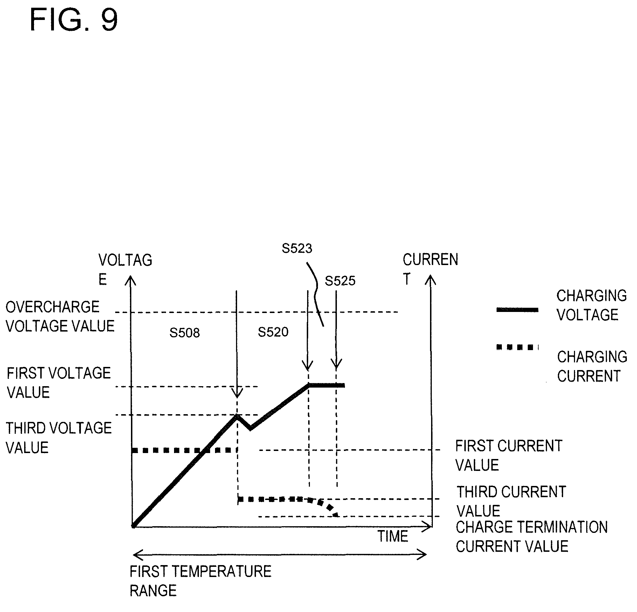

Figs. 9 to 12 are diagrams showing the transition of the charging voltage and the charging current in the sixth exemplary embodiment. In Figs. 9 to 12, the solid lines indicate the charging voltage and the dashed lines the charging current. In Figs. 9 to 12, the step numbers (S) in Fig. 8 are given to show the corresponding relationships. During a constant current charging period, the charging current is controlled to be constant and the battery voltage increases. During a constant voltage charging period, the battery voltage is controlled to be constant and the charging current decreases. When the charging current is reduced during the constant current charging, a voltage drop occurs due to the internal resistance.

Fig. 9 is an example in which charging is started in the first temperature range and is stopped without any temperature range change. In the case shown in Fig. 9, after the battery has been charged to the third voltage value, the upper limit voltage is switched to the first voltage value and the charging current is switched from the first current value to the third current value.

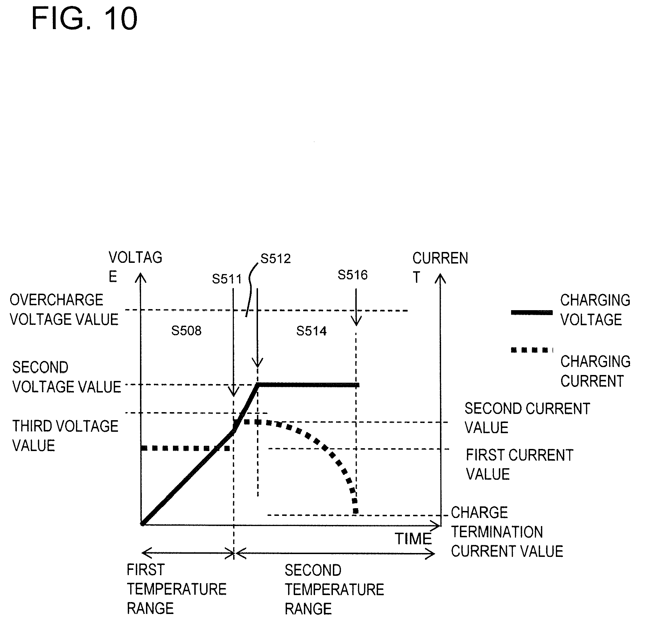

Fig. 10 is an example in which charging is started in the first temperature range and the temperature range transitions to the second temperature range before the battery voltage reaches the third voltage value. In the case shown in Fig. 10, due to the temperature range change, the upper limit voltage is switched to the second voltage value and the charging current is switched from the first current value to the second current value.

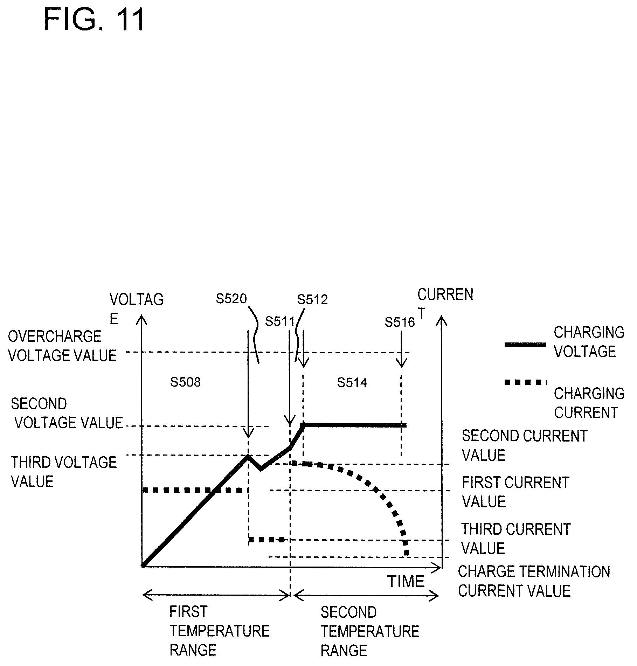

Fig. 11 is an example in which charging is started in the first temperature range and the temperature range transitions to the second temperature range after the battery voltage reaches the third voltage value, but before it reaches the first voltage value. In the case shown in Fig. 11, after the battery has been charged to the third voltage value, the upper limit voltage is switched to the first voltage value and the charging current is switched from the first current value to the third current value. Further, due to the temperature range change, the upper limit voltage is switched to the second voltage value and the charging current is switched from the third current value to the second current value.

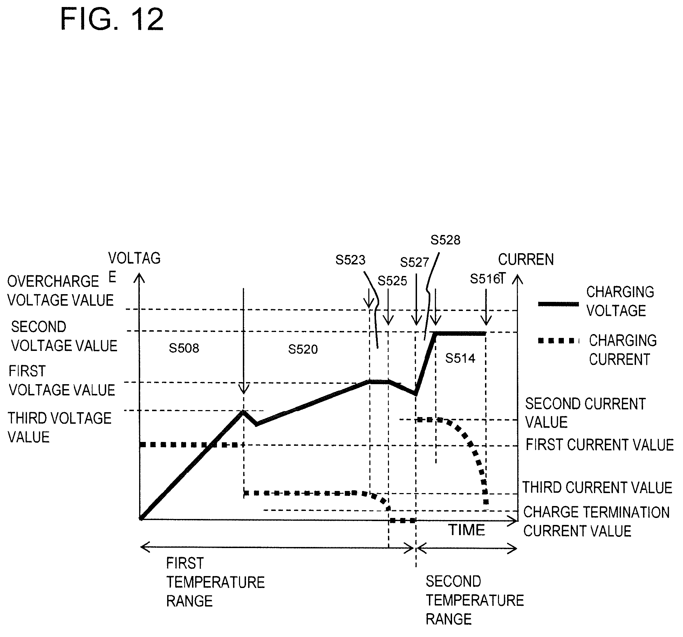

Fig. 12 is an example in which charging is started in the first temperature range and the temperature range transitions to the second temperature range after the battery has been charged to the first voltage value and the charging has been stopped. In the case shown in Fig. 12, after the battery has been charged to the third voltage value, the upper limit voltage is switched to the first voltage value and the charging current is switched from the first current value to the third current value. Then, the battery is charged to the first voltage value before the charging is stopped. Further, due to the temperature range change while charging is stopped, the upper limit voltage is switched to the second voltage value and the charging current is switched from the third current value to the second current value before charging is restarted.

The examples above do not include a case where the temperature range changes during constant voltage charging. However, the case where the temperature range changes during constant voltage charging can be treated as the case where the temperature changes during constant current charging. Further, the constant current charging in the first temperature range can be divided into three or more stages instead of two. In this case, the switched voltage value is set for each stage. Further, although the constant current charging in the second temperature range is not divided into stages, the constant current charging can be divided into two or more stages in the second temperature range as well.

According to the sixth exemplary embodiment, the same advantageous effects as those of the first and the second exemplary embodiments can be obtained. Further, the charging time can be reduced in the constant current charging in the first temperature range since the battery is charged with a high current in the first stage when the battery voltage is low. Deposition of lithium can be prevented since the battery is charged with a low current in the second stage when the battery voltage is high. Further, the charging efficiency can be increased since the upper limit voltage and the charging current are selected according to the temperature range. As a result, charging can be performed safely and quickly overall.

The sixth exemplary embodiment is otherwise identical to the first to the fifth exemplary embodiments.

Next, the operation of a charging apparatus, a method for charging a secondary battery, and a program that operates the charging apparatus or that controls the charging method relating to a seventh exemplary embodiment will be described. In the sixth exemplary embodiment, the constant voltage charging with the first voltage value in the first temperature range is carried out. The constant voltage charging with the first voltage value is not performed in the seventh exemplary embodiment and the battery voltage reaches the first voltage value by constant current charging with the third current value. A flowchart of the seventh exemplary embodiment is the same as the flowchart of the sixth exemplary embodiment shown in Fig. 8, except that the step S523 in Fig. 8 does not exist.

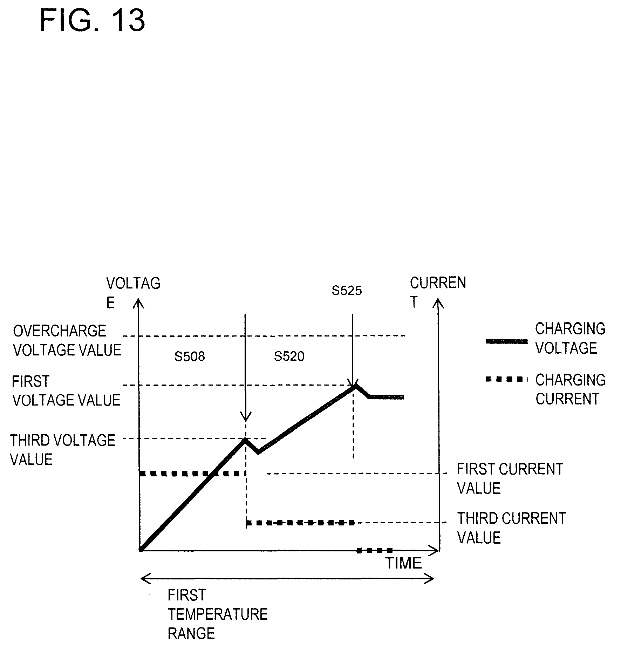

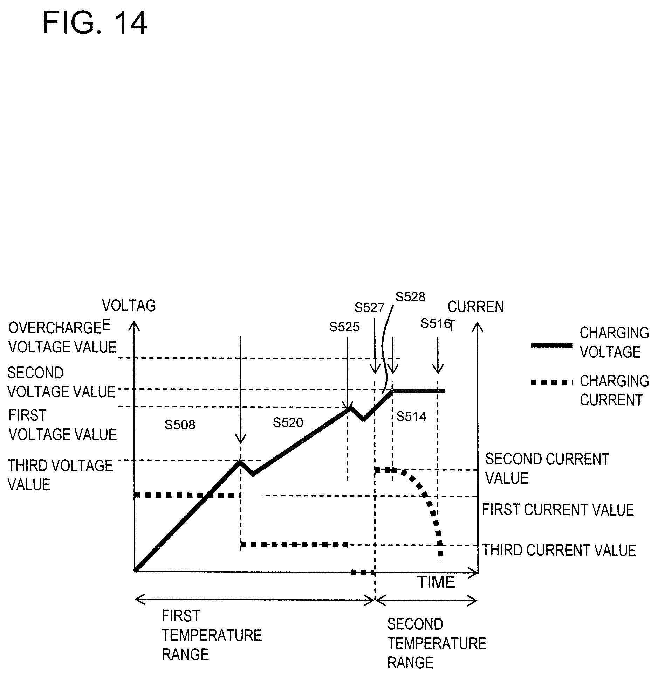

Figs. 13 and 14 are diagrams showing the transition of the charging voltage and the charging current in the seventh exemplary embodiment. In Figs. 13 to 14, the step numbers (S) in Fig. 8 are given to show the corresponding relationships as well.

Fig. 13 is an example in which charging is started in the first temperature range and is stopped without any temperature range change. In the case shown in Fig. 13, after the battery has been charged to the third voltage value, the upper limit voltage is switched to the first voltage value and the charging current is switched from the first current value to the third current value. Unlike Fig. 9, however, the constant voltage charging with the first voltage value is not carried out.

Fig. 14 is an example in which charging is started in the first temperature range and the temperature range transitions to the second temperature range after the battery has been charged to the first voltage value and the charging has been stopped. In the case shown in Fig. 14, after the battery has been charged to the third voltage value, the upper limit voltage is switched to the first voltage value and the charging current is switched from the first current value to the third current value. Then, the battery is charged to the first voltage value before the charging is stopped. Further, due to the temperature range change while charging is stopped, the upper limit voltage is switched to the second voltage value and the charging current is switched from the third current value to the second current value before charging is restarted. Unlike Fig. 12, however, the constant voltage charging with the first voltage value in the first temperature range is not carried out.

The seventh exemplary embodiment is otherwise identical to the first to the sixth exemplary embodiments.

Next, the operation of a charging apparatus, a method for charging a secondary battery, and a program that operates the charging apparatus or that controls the charging method relating to an eighth exemplary embodiment will be described. The configuration of the charging apparatus and how the temperature ranges are set in the eighth exemplary embodiment are the same as in the fifth exemplary embodiment. There are two temperature ranges in the first to the seven exemplary embodiments, but three or more temperature ranges can be provided. Since the eighth exemplary embodiment is identical to the other exemplary embodiments above except for the fact that there are more temperature ranges, no flowchart will be provided.

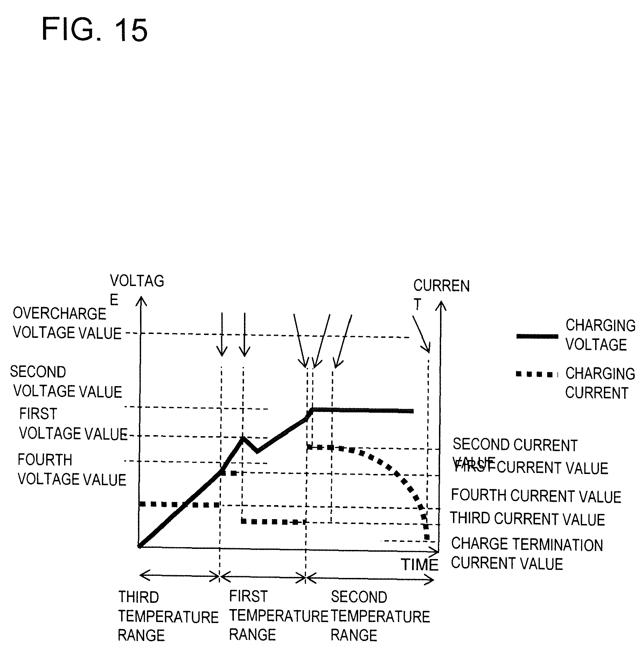

Fig. 15 is a diagram showing the transition of the charging voltage and the charging current in the eighth exemplary embodiment. A third temperature range lower than the first temperature range is provided in the eighth exemplary embodiment. The first temperature range and the third temperature range are adjacent to each other. The boundary temperature between the first and the third temperature ranges can be set freely. For instance, the third temperature range can be a region of less than minus ten degrees Celsius, the first temperature range a region of minus ten degrees Celsius or more but less than zero degrees Celsius, and the second temperature range a region of zero degrees Celsius or more.

It is preferred that a fourth voltage value less than the first voltage value in the first temperature range be set as the upper limit value during charging in the third temperature range. Further, it is preferred that a fourth charging current less than the first charging current for the constant current charging in the first temperature range be set as the charging current for constant current charging in the third temperature range. This is because, in the case of lithium-ion battery, the lower the temperature, the more likely the deposition of hazardous substances occur.

Fig. 15 is an example in which charging is started in the third temperature range and the temperature range transitions to the first temperature range before the battery voltage reaches the fourth voltage value. This case is the same as the example shown in Fig. 11 after the temperature has transitioned to the first temperature range.

According to the eighth exemplary embodiment, charging can be carried out safely and quickly in extremely cold conditions such as a winter night in a cold region.

The eighth exemplary embodiment can be applied to the first to the seventh exemplary embodiments. The eighth exemplary embodiment is otherwise identical to the first to the seventh exemplary embodiments.

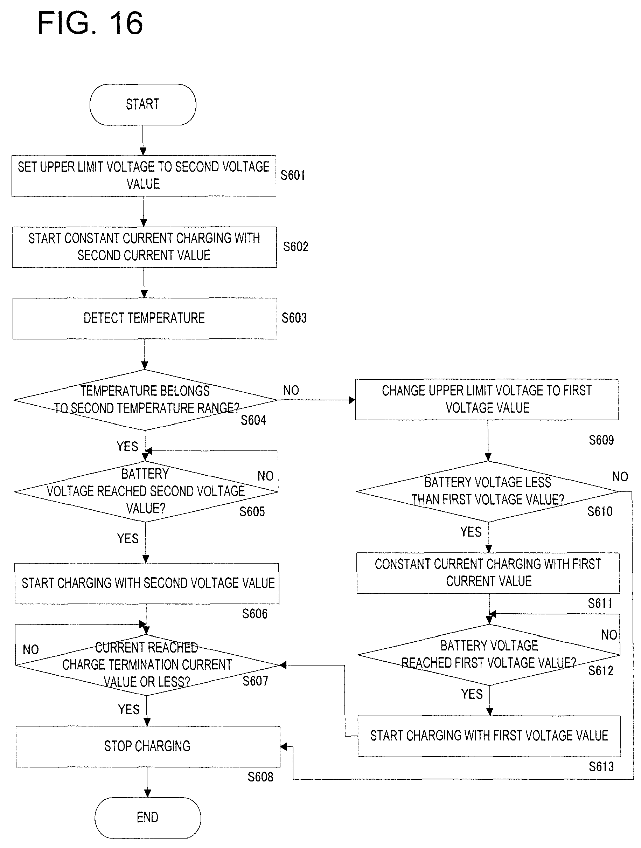

Next, the operation of a charging apparatus, a method for charging a secondary battery, and a program that operates the charging apparatus or that controls the charging method relating to a ninth exemplary embodiment will be described. Fig. 16 shows a flowchart for explaining the operation of the charging apparatuses, the method for charging the secondary battery, and the program that operates the charging apparatuses or that controls the charging method relating to the ninth exemplary embodiment. The configuration of the charging apparatus and how the temperature ranges are set in the ninth exemplary embodiment are the same as in the fifth exemplary embodiment. The ninth exemplary embodiment shows an example in which, after the battery-related temperature reaches the second temperature range and the upper limit voltage value of the secondary battery is set/changed to the second voltage value, the battery-related temperature ends up belonging to the first temperature range in each of the exemplary embodiments described above. Fig. 16 shows a partial process of the case where the second temperature range transitions to the first temperature range.

In each of the exemplary embodiments above, the charging control unit 102 or the voltage setting unit 103 sets the upper limit value of the battery voltage during charging to the second voltage value (step S601). Then, the charging control unit 102 starts charging the secondary battery with the second current value until the battery voltage reaches the second voltage value (step S602). Steps in S603 to S608 thereafter are the same as in each of the exemplary embodiments above.

When the battery-related temperature ends up belonging to the first temperature range during charging, the charging control unit 102 or the voltage setting unit 103 changes the upper limit voltage value during charging to the first voltage value in response to the temperature range information from the temperature range determination unit 106 (step S609).

Next, the voltage comparison unit 107 verifies whether or not the battery voltage is less than the first voltage value in response to the voltage information from the voltage detection unit 105 (step S610). When the battery voltage is less than the first voltage value, the charging control unit 102 charges the battery to the first voltage value and stops charging as in each of the exemplary embodiments above (steps S611 to S613, S607, S608). When the battery voltage is the first voltage value or more, the charging control unit 102 stops charging without carrying it out (step S608).

In a case where the third voltage value that switches the first constant current charging step to the second constant current charging step is set, the voltage comparison unit 107 separately carries out a step of verifying whether or not the battery voltage is less than the third voltage value before S610. When the battery voltage is less than the third voltage value, as in each of the exemplary embodiments above, the charging control unit 102 performs the first and the second constant current charging steps and the constant voltage charging step, charges the battery to the first voltage value, and stops charging. When the battery voltage is not less than the third voltage value, the charging control unit 102 performs the second constant current charging step and the constant voltage charging step, charges the battery to the first voltage value, and stops charging.

The ninth exemplary embodiment can be applied to the first to the eighth exemplary embodiments. The ninth exemplary embodiment is otherwise identical to the first to the eighth exemplary embodiments.

According to the ninth exemplary embodiment, the risk of deposition of hazardous substances can be reduced when the battery-related temperature transitions from the second temperature range to the first temperature range during charging due to a temperature decrease or heating appliances or heating devices turned off.

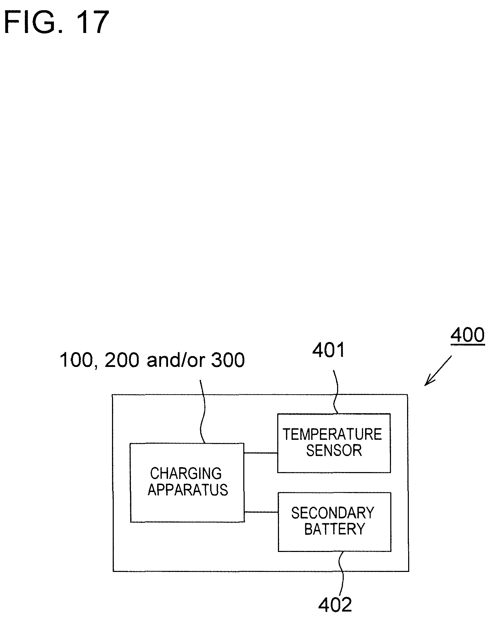

An electricity storage system relating to a tenth exemplary embodiment will be described. Fig. 17 is a schematic diagram showing an example of the electricity storage system relating to the tenth exemplary embodiment.

The electricity storage system 400 comprises a secondary battery 402 having at least one cell, at least one of the charging apparatuses 100, 200, and 300 relating to the exemplary embodiments above connected to the secondary battery 402, and a temperature sensor connected to the charging apparatus 100, 200, or 300. A charging power supply is connected to the charging apparatus 100, 200, or 300. The charging apparatus 100, 200, or 300 charges the secondary battery 402.

The temperature sensor 401 is a sensor that detects the battery-related temperature described above. For instance, the temperature sensor 401 can be installed so as to detect at least one of the following: the temperature of the cell surface, the temperature between the cells, and the temperature of a conductor connected to the cell. Further, for instance, the temperature sensor 401 may be installed so as to detect the temperature of an environment in which the secondary battery 402, the charging apparatus 100, 200, or 300, or the electricity storage system 400 is provided. A plurality of the temperature sensors 401 may be installed so as to detect the temperatures of a plurality of areas.

A charging method by the electricity storage system 400 is identical to the charging methods described above.

According to the tenth exemplary embodiment, the same advantageous effects as those of the charging apparatus relating to the exemplary embodiments above can be obtained. For instance, even in a case where charging is started with a low battery-related temperature, the battery capacity can be increased when the battery-related temperature rises after the charging has been started. Further, charging can be carried out in a shorter period of time. Moreover, charging can be performed safely.

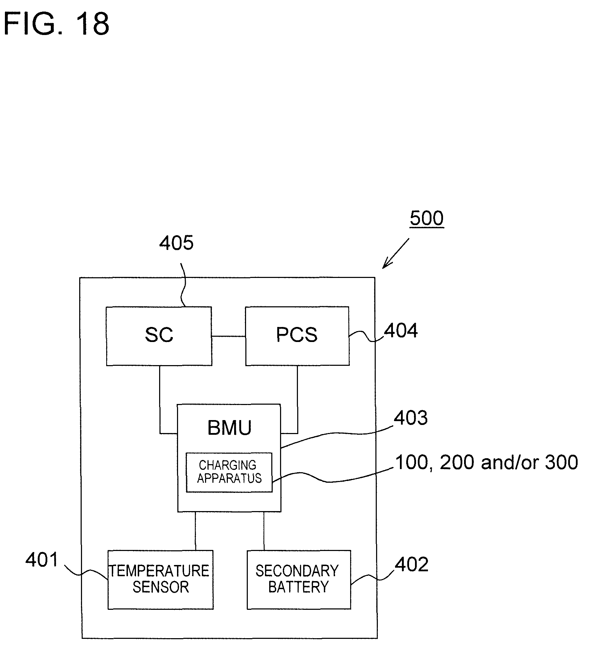

An electricity storage system relating to an eleventh exemplary embodiment will be described. Fig. 18 is a schematic diagram showing an example of the electricity storage system relating to the eleventh exemplary embodiment. The electricity storage system relating to the eleventh exemplary embodiment is a preferred mode of the electricity storage system relating to the tenth exemplary embodiment.

The electricity storage system 500 comprises the secondary battery 402 having at least one cell, a battery management unit (BMU) 403 that controls the charge and discharge of the secondary battery 402 and that manages the protection of the secondary battery 402, a power conditioner system (PCS) 404 that converts DC power into AC power between the secondary battery 402 and the power supply or load and that adjusts the voltage and frequency, and a system controller (SC) 405 that controls and monitors the BMU 403 and the PCS. The BMU 403, the PCS 404, and the SC 405 are mutually connected so that they are able to communicate with each other. A charging power supply is connected to the PCS 404. Fig. 18 shows the PCS and the SC as separate elements, but the mode shown in the drawing includes a mode in which the PCS and the SC are integrated into one element.

The charging apparatus 100, 200, or 300 relating to the exemplary embodiments above is incorporated into the BMU 403. The temperature sensor 401 and the secondary battery 402 are connected to the charging apparatus 100, 200, or 300.

The program can be incorporated into, for instance, the SC 405. The program has the charging apparatus execute the operation of each unit and each step of the charging method described above.

The eleventh exemplary embodiment is otherwise identical to the tenth exemplary embodiment.

According to the eleventh exemplary embodiment, the same advantageous effects as those of the tenth exemplary embodiments can be obtained.

The charging apparatus, the electricity storage system, the charging method, and the program of the present invention have been described on the basis of the exemplary embodiments above, but the present invention is not limited thereto. It should be noted that modifications may be done without departing the gist and scope of the present invention as disclosed herein and claimed as appended herewith. Also it should be noted that any combination of the disclosed and/or claimed elements, matters and/or items may fall under the modifications aforementioned.

It should be noted that other objects, features and aspects of the present invention will become apparent in the entire disclosure.

Each step in the method can be a process in the program.

The ranges of the numerical values used in the present description should be interpreted as a specific numeric value or small range included in these ranges even in cases where no explanation is provided.

Some or all of the exemplary embodiments above can be described as in Modes below without being limited thereto.

### (Mode 1)

A charging apparatus, comprising:
a temperature detection unit; and
a charging control unit that changes an upper limit voltage value of a secondary battery to a first voltage value corresponding to a predetermined first temperature range in response to a detection result from the temperature detection unit indicating a first temperature within the first temperature range and that controls so that the secondary battery is charged until the upper limit value is reached.

### (Mode 2)

The charging apparatus, wherein
the charging control unit changes the upper limit value to the first voltage value from a second voltage value corresponding to a predetermined second temperature range in response to a detection result indicating a change from a second temperature within the second temperature range to a temperature within the first temperature range from the temperature detection unit that detected the temperature within the second temperature range, starts the charging of the secondary battery, which has been stopped with the upper limit value at the second voltage value, and controls so that the secondary battery is charged to the first voltage value, which is a new upper limit value.

### (Mode 3)

The charging apparatus, wherein
the charging control unit changes the upper limit value to the first voltage value from a second voltage value corresponding to a predetermined second temperature range in response to a detection result indicating a change from a second temperature within the second temperature range to a temperature within the first temperature range from the temperature detection unit that detected the temperature within the second temperature range, continues ongoing charging of the secondary battery with the upper limit value at the second voltage value, and controls so that the secondary battery is charged to the first voltage value, which is a new upper limit value.

### (Mode 4)

The charging apparatus, wherein
the first voltage value is higher than the second voltage value.

### (Mode 5)

The charging apparatus, wherein
the charging control unit sets the upper limit value to the second voltage value based on a fact that the detected temperature belongs to the second temperature range, and sets the upper limit value to the first voltage value based on a fact that the detected temperature belongs to the first temperature range, which is in a higher range than the second temperature range.

### (Mode 6)

The charging apparatus, wherein
the second temperature range includes a range of less than zero degrees Celsius.

### (Mode 7)

The charging apparatus, wherein
the first temperature range includes a range of zero degrees Celsius or more.

### (Mode 8)

The charging apparatus, wherein
the charging control unit changes the upper limit value from the first voltage value to the second voltage value based on a detection result indicating a change from a temperature within the first temperature range to a temperature within the second temperature range from the temperature detection unit that detected (or was detecting) the temperature within the first temperature range.

### (Mode 9)

The charging apparatus, wherein
the charging control unit charges the secondary battery with a first current value until the voltage of the secondary battery reaches a predetermined third voltage value in response to temperature information from the temperature detection unit that has detected a temperature belonging to the second temperature range, and charges the secondary battery with a second current value less than the first current value until the voltage of the secondary battery reaches the second voltage value in response to detection that the voltage has reached the third voltage value.

### (Mode 10)

The charging apparatus, wherein
the charging control unit charges the secondary battery with the second voltage value until reaching a predetermined third current value in response to detection that the voltage has reached the second voltage value.

### (Mode 11)

The charging apparatus, wherein
the charging control unit charges the secondary battery with a fourth current value until the voltage of the secondary battery reaches the first voltage value in response to temperature information from the temperature detection unit that has detected a temperature belonging to the first temperature range, and charges the secondary battery with the first voltage value until a charging current reaches a predetermined fifth current value in response to detection that the voltage has reached the first voltage value.

### (Mode 12)

The charging apparatus, wherein
the fourth current value is higher than the first current value.

### (Mode 13)

A charging apparatus comprising:
a temperature detection unit;
a voltage setting unit that variably sets an upper limit voltage value of the secondary battery based on a temperature detected by the temperature detection unit; and
a charging control unit that controls the charging apparatus so that the secondary battery is charged until the upper limit value is reached in response to the upper limit value information from the voltage setting unit that has changed the upper limit value based on a detection result from the temperature detection unit indicating a first temperature within a predetermined first temperature range.

### (Mode 14)

The charging apparatus, wherein
the charging control unit starts the charging of the secondary battery, which has been stopped with the upper limit value at a second voltage value, and controls so that the secondary battery is charged to the second voltage value, which is a new upper limit value, in response to the upper limit value information from the voltage setting unit that has changed the upper limit value from the second voltage value to the first voltage value.

### (Mode 15)

The charging apparatus, wherein
the charging control unit continues ongoing charging of the secondary battery with the upper limit value at a second voltage value, and controls so that the secondary battery is charged to the second voltage value, which is a new upper limit value, in response to the upper limit value information from the voltage setting unit that has changed the upper limit value from the second voltage value to the first voltage value.

### (Mode 16)

The charging apparatus, wherein
the second voltage value is higher than the first voltage value.

### (Mode 17)

The charging apparatus, wherein
the voltage setting unit sets the upper limit value to the second voltage value based on a fact that the detected temperature belongs to the second temperature range, and sets the upper limit value to the first voltage value based on a fact that the detected temperature belongs to the first temperature range, which is in a higher range than the second temperature range.

### (Mode 18)

The charging apparatus, wherein
the second temperature range includes a range of less than zero degrees Celsius.

### (Mode 19)

The charging apparatus, wherein
the first temperature range includes a range of zero degrees Celsius or more.

### (Mode 20)

The charging apparatus, wherein
the voltage setting unit changes the upper limit value from the first voltage value to the second voltage value based on a detection result indicating a change from a temperature within the first temperature range to a temperature within the second temperature range from the temperature detection unit that detected the temperature within the first temperature range.

### (Mode 21)

The charging apparatus, wherein
the charging control unit charges the secondary battery with a first current value until the voltage of the secondary battery reaches a predetermined third voltage value in response to the upper limit value information from the voltage setting unit that has set the upper limit value to the second voltage value, and charges the secondary battery with a second current value less than the first current value until the voltage of the secondary battery reaches the second voltage value in response to detection that the voltage has reached the third voltage value.

### (Mode 22)

The charging apparatus, wherein
the charging control unit charges the secondary battery with the second voltage value until reaching a predetermined third current value in response to detection that the voltage has reached the second voltage value.

### (Mode 23)

The charging apparatus, wherein
the charging control unit charges the secondary battery with a fourth current value until the voltage of the secondary battery reaches the first voltage value in response to the upper limit value information from the voltage setting unit that has set the upper limit value to the first voltage value, and charges the secondary battery with the first voltage value until a charging current reaches a predetermined third current value in response to detection that the voltage has reached the first voltage value.

### (Mode 24)

The charging apparatus, wherein
the fifth current value is higher than the first current value.

### (Mode 25)

The charging apparatus, wherein
a temperature detected by the temperature detection unit is at least one of:
a temperature of any part of the secondary battery;
a temperature of an environment in which the secondary battery is placed; and
a temperature of an environment in which the charging apparatus is placed.

### (Mode 26)

The charging apparatus, wherein
the secondary battery is a lithium-ion battery.

### (Mode 27)

The charging apparatus, wherein
the temperature detection unit performs detection at a time interval in a state in which the charging control unit suspends charging and performs charging.

### (Mode 28)

An electricity storage system, comprising:
the charging apparatus relating to Modes;
the secondary battery connected to the charging apparatus; and
a temperature sensor connected to the temperature detection unit.

### (Mode 29)

The electricity storage system, further comprising:
a battery management unit that manages the charge and discharge of the secondary battery; and
the battery management unit comprising the charging apparatus.

### (Mode 30)

The electricity storage system, further comprising:
a power conditioner for connecting the secondary battery and a charging power supply; and
a system controller that controls the battery management unit and the power conditioner, wherein
the battery management unit, the power conditioner, and the system controller are connected to each other.

### (Mode 31)

A program operating the charging apparatus relating to Modes.

### (Mode 32)

A method for charging a secondary battery, comprising:
setting an upper limit voltage value of the secondary battery to a first voltage value corresponding to a predetermined first temperature range;
detecting a temperature related to the secondary battery;
changing the upper limit value from the first voltage value to a second voltage value in response to detecting a temperature belonging to a predetermined second temperature range; and
charging the secondary battery to the second voltage value in response to detecting the temperature belonging to the second temperature range.

### (Mode 33)

The charging method, wherein
the charging of the secondary battery in response to detecting the temperature belonging to the second temperature range is started in a state in which charging has been suspended with the upper limit value at the first voltage value.

### (Mode 34)

The charging method, further comprising:
charging the secondary battery until the voltage of the secondary battery reaches the first voltage value and stopping charging.

### (Mode 35)

The charging method, wherein
changing of the upper limit value from the first voltage value to the second voltage value while continuing to charge the secondary battery in response to detecting the temperature belonging to the second temperature range is performed in a state in which the secondary battery is being charged with the first voltage value as the upper limit value.

### (Mode 36)

A method for charging a secondary battery, comprising:
setting an upper limit voltage value of the secondary battery to a first voltage value corresponding to a predetermined first temperature range;
detecting a temperature related to the secondary battery;
changing the upper limit value from the first voltage value to a second voltage value in response to detecting a temperature belonging to a predetermined second temperature range; and
charging the secondary battery to the second voltage value in response to a fact that the upper limit value has been set to the second voltage value.

### (Mode 37)

The charging method, wherein
the charging of the secondary battery in response to a fact that the upper limit value has been set to the second voltage value is started in a state in which charging has been suspended with the upper limit value at the first voltage value.

### (Mode 38)

The charging method, further comprising:
charging the secondary battery until the voltage of the secondary battery reaches the first voltage value and stopping charging.

### (Mode 39)

The charging method, wherein
changing of the upper limit value from the first voltage value to the second voltage value while continuing to charge the secondary battery is performed in a state in which the secondary battery is being charged with the first voltage value as the upper limit value.

### (Mode 40)

The charging method, wherein
the second voltage value is higher than the first voltage value.

### (Mode 41)

The charging method, further comprising:
changing the upper limit value from the second voltage value to the first voltage value in response to detecting a temperature belonging to the first temperature range in a state in which the second voltage value is set as the upper limit value.

### (Mode 42)

The method for charging a secondary battery, further comprising:
charging the secondary battery with the first voltage value as the upper limit value, wherein
the charging the secondary battery with the first voltage value as the upper limit value comprises:
   charging the secondary battery with a first current value until the voltage of the secondary battery reaches a predetermined third voltage value; and
   charging the secondary battery with a second current value less than the first current value until the voltage of the secondary battery reaches the first voltage value in response to a fact that the voltage of the secondary battery has reached the third voltage value.

### (Mode 43)

The method for charging a secondary battery, wherein
the charging the secondary battery with the first voltage value as the upper limit value further comprises:
charging the secondary battery with the first voltage value until a charging current reaches a predetermined third current value in response to a fact that the voltage of the secondary battery has reached the first voltage value.

### (Mode 44)

The method for charging a secondary battery, wherein
the charging the secondary battery to the second voltage value comprises:
charging the secondary battery with a fourth current value until the voltage of the secondary battery reaches the second voltage value; and charging the secondary battery with the second voltage value until the charging current reaches a predetermined fifth current value in response to a fact that the voltage of the secondary battery has reached the second voltage value.

### (Mode 45)

The method for charging a secondary battery, wherein
the fourth current value is higher than the first current value.

### (Mode 46)

The charging method, wherein
the first temperature range includes a range of less than zero degrees Celsius.

### (Mode 47)

The charging method, wherein
the second temperature range includes a range of zero degrees Celsius or more.

### (Mode 48)

The charging method, wherein
the temperature is at least one of:
a temperature of any part of the secondary battery;
a temperature of an environment in which the secondary battery is placed; and
a temperature of an environment in which an electricity storage system that charges the secondary battery is placed.

### (Mode 49)

The charging method, wherein
the secondary battery is a lithium-ion battery.

### (Mode 50)

The method for charging a secondary battery, comprising:
detecting the temperature at a time interval at least from when the secondary battery is connected to a charging power supply until the voltage of the secondary battery reaches the second voltage value.

### (Mode 51)

A program for controlling the charging method relating to Modes.

### (Mode 52)

An automobile, comprising the charging apparatus relating to Modes.

### (Mode 53)

An automobile, comprising the electricity storage system relating to Modes.

### (Mode 54)

An electric motor, comprising the charging apparatus relating to Modes.

### (Mode 55)

An electric motor, comprising the electricity storage system relating to Modes.

### (Mode 56)

A mobile apparatus, comprising the charging apparatus relating to Modes.

### (Mode 57)

A mobile apparatus, comprising the electricity storage system relating to Modes.

### (Mode 58)

A portable power supply, comprising the charging apparatus relating to Modes.

### (Mode 59)

A portable power supply, comprising the electricity storage system relating to Modes.

### [INDUSTRIAL APPLICABILITY]

The charging apparatus, the electricity storage system, the charging method, and the program of the present invention can be suitably applied to the charging of a secondary battery, especially a lithium-ion battery. For instance, the present invention can be applied to an automobile, mobile apparatus, electric motor, portable power supply, etc. having a secondary battery.

### [REFERENCE SIGNS LIST]

100, 200, 300: charging apparatus
101: temperature detection unit
102: charging control unit
103: voltage setting unit
104: connection detection unit
105: voltage detection unit
106: temperature range determination unit
107: voltage comparison unit
108: storage unit
400, 500: electricity storage system
401: temperature sensor
402: secondary battery
403: battery management unit
404: power conditioner
405: system controller

## Claims

1. A charging apparatus, comprising:
a temperature detection unit; and
a charging control unit that changes an upper limit voltage value of a secondary battery to a first voltage value corresponding to a predetermined first temperature range in response to a detection result from the temperature detection unit indicating a first temperature within the first temperature range and that controls so that the secondary battery is charged until the upper limit value is reached.

2. The charging apparatus according to claim 1, wherein
the charging control unit changes the upper limit value to the first voltage value from a second voltage value corresponding to a predetermined second temperature range in response to a detection result indicating a change from a second temperature within the second temperature range to a temperature within the first temperature range from the temperature detection unit that detected the temperature within the second temperature range, starts the charging of the secondary battery, which has been stopped with the upper limit value at the second voltage value, and controls so that the secondary battery is charged to the first voltage value, which is a new upper limit value.

3. The charging apparatus according to claim 1, wherein
the charging control unit changes the upper limit value to the first voltage value from a second voltage value corresponding to a predetermined second temperature range in response to a detection result indicating a change from a second temperature within the second temperature range to a temperature within the first temperature range from the temperature detection unit that detected the temperature within the second temperature range, continues ongoing charging of the secondary battery with the upper limit value at the second voltage value, and controls so that the secondary battery is charged to the first voltage value, which is a new upper limit value.

4. The charging apparatus according to claim 2 or 3, wherein
the first voltage value is higher than the second voltage value.

5. The charging apparatus according to any one of claims 2 to 4, wherein
the charging control unit sets the upper limit value to the second voltage value based on a fact that the detected temperature belongs to the second temperature range, and sets the upper limit value to the first voltage value based on a fact that the detected temperature belongs to the first temperature range, which is in a higher range than the second temperature range.

6. The charging apparatus according to claim 5, wherein
the second temperature range includes a range of less than zero degrees Celsius.

7. The charging apparatus according to claim 5 or 6, wherein
the first temperature range includes a range of zero degrees Celsius or more.

8. The charging apparatus according to any one of claims 5 to 7, wherein
the charging control unit changes the upper limit value from the first voltage value to the second voltage value based on a detection result indicating a change from a temperature within the first temperature range to a temperature within the second temperature range from the temperature detection unit that detected (or was detecting) the temperature within the first temperature range.

9. The charging apparatus according to any one of claims 2 to 8, wherein
the charging control unit charges the secondary battery with a first current value until the voltage of the secondary battery reaches a predetermined third voltage value in response to temperature information from the temperature detection unit that has detected a temperature belonging to the second temperature range, and charges the secondary battery with a second current value less than the first current value until the voltage of the secondary battery reaches the second voltage value in response to detection that the voltage has reached the third voltage value.

10. The charging apparatus according to claim 9, wherein
the charging control unit charges the secondary battery with the second voltage value until reaching a predetermined third current value in response to detection that the voltage has reached the second voltage value.

11. The charging apparatus according to claim 9 or 10, wherein
the charging control unit charges the secondary battery with a fourth current value until the voltage of the secondary battery reaches the first voltage value in response to temperature information from the temperature detection unit that has detected a temperature belonging to the first temperature range, and charges the secondary battery with the first voltage value until a charging current reaches a predetermined fifth current value in response to detection that the voltage has reached the first voltage value.

12. The charging apparatus according to claim 11, wherein
the fourth current value is higher than the first current value.

13. The charging apparatus according to any one of claims 1 to 12, wherein
a temperature detected by the temperature detection unit is at least one of:
a temperature of any part of the secondary battery;
a temperature of an environment in which the secondary battery is placed; and
a temperature of an environment in which the charging apparatus is placed.

14. The charging apparatus according to any one of claims 1 to 13, wherein
the secondary battery is a lithium-ion battery.

15. An electricity storage system, comprising:
the charging apparatus according to any one of claims 1 to 14;
the secondary battery connected to the charging apparatus; and
a temperature sensor connected to the temperature detection unit.

16. The electricity storage system according to claim 15, further comprising:
a battery management unit that manages the charge and discharge of the secondary battery; and
the battery management unit comprising the charging apparatus.

17. The electricity storage system according to claim 16, further comprising:
a power conditioner for connecting the secondary battery and a charging power supply; and
a system controller that controls the battery management unit and the power conditioner, wherein
the battery management unit, the power conditioner, and the system controller are connected to each other.

18. A program operating the charging apparatus according to any one of claims 1 to 14.

19. A method for charging a secondary battery, comprising:
setting an upper limit voltage value of the secondary battery to a first voltage value corresponding to a predetermined first temperature range;
detecting a temperature related to the secondary battery;
changing the upper limit value from the first voltage value to a second voltage value in response to detecting a temperature belonging to a predetermined second temperature range; and
charging the secondary battery to the second voltage value in response to detecting the temperature belonging to the second temperature range.

20. The charging method according to claim 19, wherein
the charging of the secondary battery in response to detecting the temperature belonging to the second temperature range is started in a state in which charging has been suspended with the upper limit value at the first voltage value.

21. The charging method according to claim 20, further comprising:
charging the secondary battery until the voltage of the secondary battery reaches the first voltage value and stopping charging.

22. The charging method according to claim 19, wherein
changing of the upper limit value from the first voltage value to the second voltage value while continuing to charge the secondary battery in response to detecting the temperature belonging to the second temperature range is performed in a state in which the secondary battery is being charged with the first voltage value as the upper limit value.

23. The charging method according to any one of claims 19 to 22, wherein
the second voltage value is higher than the first voltage value.

24. The charging method according to any one of claims 19 to 23, further comprising:
changing the upper limit value from the second voltage value to the first voltage value in response to detecting a temperature belonging to the first temperature range in a state in which the second voltage value is set as the upper limit value.

25. The charging method according to any one of claims 19 to 24, further comprising:
charging the secondary battery with the first voltage value as the upper limit value, wherein
the charging the secondary battery with the first voltage value as the upper limit value further comprises:
charging the secondary battery with a first current value until the voltage of the secondary battery reaches a predetermined third voltage value; and
charging the secondary battery with a second current value less than the first current value until the voltage of the secondary battery reaches the first voltage value in response to a fact that the voltage of the secondary battery has reached the third voltage value.

26. The charging method according to claim 25, wherein
the charging the secondary battery with the first voltage value as the upper limit value further comprises:
charging the secondary battery with the first voltage value until a charging current reaches a predetermined third current value in response to a fact that the voltage of the secondary battery has reached the first voltage value.

27. The charging method according to claim 25 or 26, wherein
the charging the secondary battery to the second voltage value comprises:
charging the secondary battery with a fourth current value until the voltage of the secondary battery reaches the second voltage value; and
charging the secondary battery with the second voltage value until the charging current reaches a predetermined fifth current value in response to a fact that the voltage of the secondary battery has reached the second voltage value.

28. The charging method according to claim 27, wherein
the fourth current value is higher than the first current value.

29. The charging method according to any one of claims 19 to 28, wherein
the first temperature range includes a range of less than zero degrees Celsius.

30. The charging method according to any one of claims 19 to 29, wherein
the second temperature range includes a range of zero degrees Celsius or more.

31. The charging method according to any one of claims 19 to 30, wherein
the temperature is at least one of:
a temperature of any part of the secondary battery;
a temperature of an environment in which the secondary battery is placed; and
a temperature of an environment in which an electricity storage system that charges the secondary battery is placed.

32. The charging method according to any one of claims 19 to 31, wherein
the secondary battery is a lithium-ion battery.

33. A program for controlling the charging method according to any one of claims 19 to 32.
